# EUROPÄISCHE PATENTSCHRIFT

(11) **EP 1 897 356 B1**
(45) Veröffentlichungstag und Bekanntmachung des Hinweises auf die Patenterteilung: **28.01.2015**
(21) Anmeldenummer: 06777492.7
(22) Anmeldetag: 27.06.2006
(51) Int. Cl.: H04M 3/56, H04N 7/15, H04L 12/18

(54) **VERFAHREN UND KONFERENZSERVER ZUM INITIALISIEREN VON TERMINIERTEN KONFERENZEN**
METHOD AND CONFERENCE SERVER FOR INITIALISATION OF SCHEDULED CONFERENCES
PROCEDE ET SERVEUR DE CONFERENCE POUR INITIALISER DES CONFERENCES PLANIFIEES

(30) Priorität: 30.06.2005 DE 102005030597
(43) Veröffentlichungstag der Anmeldung: 12.03.2008
(73) Patentinhaber: Unify GmbH & Co. KG, 81379 München (DE)
(72) Erfinder: BOZIONEK, Bruno, 33178 Borchen (DE); KLAGHOFER, Karl, 81373 München (DE)
(74) Vertreter: Fritzsche, Thomas
(86) Internationale Anmeldenummer: PCT/EP2006/063599
(87) Internationale Veröffentlichungsnummer: WO 2007/003535

(56) Entgegenhaltungen:
- WO-A-2004/114662
- US-A1- 2002 152 205
- US-B1- 6 275 575

## Beschreibung

In Kommunikationsnetzen ist zusätzlich zu den üblichen Leistungsmerkmalen wie beispielsweise Rufumleitung oder Anrufbeantwortung das Leistungsmerkmal Konferenz verfügbar. Bei einer Einberufung einer Konferenz wird den einzelnen Konferenzteilnehmern der Ort der Konferenz bzw. der Konferenzbereich, die Art der Konferenz und der Termin beispielsweise per E-Mail oder telefonisch mitgeteilt. Um eine derartige Information den jeweiligen Konferenzteilnehmern mitteilen zu können, sind meist zusätzliche umfangreiche Recherchen über den aktuellen Aufenthaltsort der jeweiligen Konferenzteilnehmer und über die zu verwendenden Netz- und Konferenzressourcen erforderlich.

Nehmen gemäß diesen Mitteilungen an einer Konferenz beispielsweise 5 Konferenzteilnehmer an drei verschiedenen Orten oder Konferenzbereichen teil, so wird meist von einem der drei Orte, üblicherweise der Ort, an dem der die Konferenz initialisierende Konferenzteilnehmer anwesend ist, am vereinbarten Termin die Konferenz - beispielsweise eine Telefonkonferenz oder audiovisuelle Konferenz - eingerichtet. Hierzu werden mit Hilfe von Konferenzeinrichtungen im Kommunikationsnetz - beispielsweise das Telefonnetz - die Verbindungen zu den Endgeräten bzw. Telefonen an den weiteren Konferenzbereichen bzw. Orten, an den sich die weiteren Konferenzteilnehmer befinden bzw. einberufen wurden, aufgebaut und durchgeschaltet.

In der WO 2004/114662 A1 ist ein Konferenzsystem zum Aufbau von Konferenzverbindungen beschrieben, bei dem eine Person kein Wissen über die erforderlichen Systeme braucht, wenn sie eine Konferenz mit einer bestimmten Person haben möchte. Die Person wählt eine Person für die Konferenz aus und mit Hilfe des Konferenzsystems werden die passenden Systeme und Konfe renzorte ausgewählt. Die Auswahl erfolgt durch Benutzung einer für jeden Konferenzteilnehmer vorgesehenen, priorisierte Konferenzorte enthaltende Prioritätenliste zusätzlich zu anderen Ressourcenverfügbarkeiten, Systemmöglichkeiten und Ort der Person usw.

in der US-B1-6 275 575 ist ein Multi-Punkt-Telefonkonferenzsystem beschrieben, welches Speicherbereiche zum Speichern von Kontaktinformation und Terminplaninformation für eine Vielzahl an Teilnehmern umfasst.

In der US 2002/152205 A1 wird ein automatisches Sektorinformationssystem (Gelbe-Seiten-Dienstleistung) beschrieben. Das Sektorinformationssystem ermöglicht es einem Nutzer, Informationen über einen Dienstleistungssektor, z.B. über Ärzte, Einzelhändler oder öffentliche Einrichtungen, etc. anzufragen.

Die der Erfindung zugrunde liegende Aufgabe besteht darin, die Einberufung von terminierten Konferenzen, insbesondere Audio- und audiovisuelle Konferenzen zu verbessern. Die Aufgabe wird durch die Merkmale des Patentanspruchs 1 gelöst.

Der wesentliche Aspekt des erfindungsgemäßen Verfahrens ist darin zu sehen, dass die Konferenzteilnehmer ausgewählt werden und mit Hilfe zumindest eines Kommunikationsnetzes der geographische Aufenthaltsbereich der Konferenzteilnehmer ermittelt wird. Des Weiteren werden in Abhängigkeit von den ermittelten Aufenthaltsbereichen die geographischen Konferenzbereiche für die jeweiligen Konferenzteilnehmer ermittelt und diesen zusätzlich zu einer Konferenzinformation mitgeteilt.

Mit Hilfe des erfindungsgemäßen Verfahrens wird die Einberufung von Konferenzen erheblich erleichtert, da der Aufenthalt des Konferenzteilnehmers sowie die Konferenzbereiche automatisch mit Hilfe von Elementen im Netz ermittelt und anschließend die Konferenzteilnehmer informiert werden. Dies bedeutet eine erhebliche Zeiteinsparung bei der Einberufung von Konferenzen und damit eine Reduzierung des Aufwands.

Weitere vorteilhafte Ausgestaltungen der Erfindung sind den weiteren Ansprüchen zu entnehmen und werden in einem folgenden Ausführungsbeispiel erläutert, wobei das Ausführungsbeispiel anhand einer Zeichnung beschrieben wird.

Für das Ausführungsbeispiel sei angenommen, dass für eine zu terminierende Konferenz K in einem Unternehmen E ein Initiator I vorgesehen sind, wobei der Initiator I der Konferenz K als erster Konferenzteilnehmer KT1 sowie als Moderator M der Konferenz bestimmt ist. Des Weiteren ist vorausgesetzt, dass die Konferenzteilnehmer KT für eine Konferenz K durch eine URL- Adresse adressiert werden können. Die URL- Adresse (Uniform Resource Locator) dient der Adressierung im Internet. Die URL- Adresse besteht aus zwei Teilen der Bestimmung des Protokolls (http, https, ftp usw.) und der eigentlichen Adresse (z.B. www.world.de). Für eine Konferenz K sind folglich die URL- Adressen der Konferenzteilnehmer KT zu ermitteln. Dies kann beispielsweise mit Hilfe einer Liste L bzw. Tabelle erfolgen, bei der für die namentlich angegebenen Konferenzteilnehmer KT die URL- Adressen URL aufgelistet sind.

Für das erfindungsgemäße Verfahren ist eine weitere Liste oder mehrere Listen L' bzw. Tabellen vorzusehen, in der eine Zuordnung der URL- Adressen zu den Standorten und den Lokalitäten bzw. Gebäuden B eines Unternehmens U angegeben ist. In dieser zumindest einen weiteren Liste L' sind zusätzlich die Konferenzbereiche bzw. Kohferenzräume KR angezeigt, die in den einzelnen Gebäuden B des Unternehmens U für eine Konferenz K benutzt werden können, wobei die zeitliche Belegung der Konferenzräume KR aktualisiert wird.

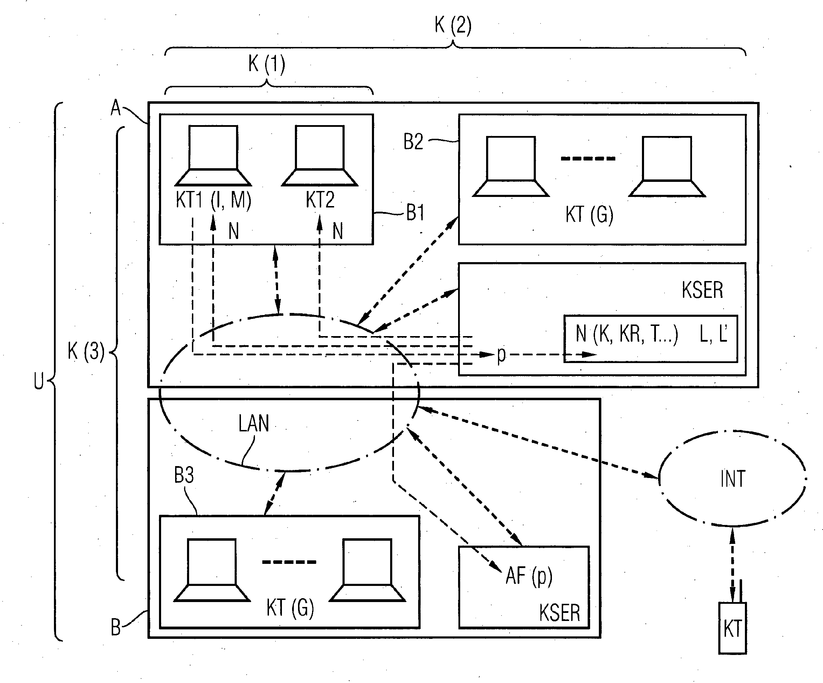

Die Figur zeigt beispielhaft die Struktur eines Unternehmens U, die einen Standort A mit zwei Gebäuden B1, B2 und einen zweiten Standort B mit einem dritten Gebäude B3 umfasst. Die beiden Standorte A,B sind über ein Unternehmens-Netzwerk, insbesondere ein lokales Netzwerk LAN, kommunikationstechnisch miteinander verbunden - in der Figur zusätzlich durch punktierte Doppelpfeile angedeutet. Für die Steuerung der Konferenzen K ist an jedem Standort A,B ein mit dem lokalen Netzwerk LAN verbundener Konferenzserver KSER vorgesehen. In diesen sind die vorhergehend beschriebenen Listen L,L' gespeichert. Für die Initialisierung einer Konferenz K kommuniziert der Initiator I einer Konferenz K in Abhängigkeit von seinem Aufenthaltsbereich mit einem der beiden Konferenzserver KSER. Hierzu werden die Parameter p einer Konferenz K von dem Initiator I an einer der Konferenzteilnehmer KSER an den Konferenzserver KSER übermittelt.

Beispielsweise können für eine zu terminierende Konferenz K folgende Parameter p geeignet sein:
- Art der Konferenz (K)
- Konferenzidentifizierung
- Startzeit
- Konferenzdauer
- Beendigungszeit
- Namen der Konferenzteilnehmer KT
- URL- Liste der Konferenzteilnehmer KT
- URL- Liste der Konferenzressourcen (z.B. Server)

In einem ersten Beispiel sei angenommen, dass der Initiator I einer einzuberufenden Konferenz K, der auch gleichzeitig erster Konferenzteilnehmer KT1 ist, eine Konferenz K(1) mit einem zweiten Konferenzteilnehmer KT2 initialisieren will. Der Initiator I gibt, wie vorhergehend erläutert die entsprechenden Parameter p - beispielsweise mit den Namen der Konferenzteilnehmer KT - an seinem Endgerät - insbesondere ein Computer - ein und übermittelt diese über das lokales Netzwerk LAN an den Konferenzserver KSER am ersten Standort A - durch eine strichlierte Linie mit Pfeil angedeutet. In dem Konferenzserver KSER werden die Aufenthaltsorte bzw. die Standorte A,B der beiden Konferenzteilnehmer KT1 und KT2 dadurch ermittelt, dass in vorhandenen Listen L,L' nach einer Zuordnung der eingegebenen URL- Adresse URL der beiden Konferenzteilnehmer KT1, KT2 gesucht und anschließend der Aufenthaltsbereich der Konferenzteilnehmer KT ermittelt wird. Beispielsweise gemäß der Listen L,L' halten sich die beiden Konferenzteilnehmer KT1, KT2 im ersten Gebäude B1 des ersten Standorts A auf.

Die Erreichbarkeit bzw. der Presence Status der Konferenzteilnehmer KT kann durch eine Presence- Funktion ermittelt werden. Hierbei wird ein Presencemodül - meist ein Presence-Server mit Hilfe des Konferenzservers KSER und des lokalen Netzes LAN abgefragt, unter welchen Anschluss des lokalen Neztes LAN er bevorzugt erreichbar ist bzw. bevorzugt aufhält - in der Figur nicht dargestellt. Auch sind im Persence- Server Informationen über die persönlichen Präferenzen von Konferenzteilnehmern KT hinsichtlich der Konferenzressourcen wie Konferenzbereich, d.h. Konferenzräume KR und Konferenzserver KSER oder Stellung in der Organisation verfügbar. Diese können in die Ermittlung der Konferenzbereiche bzw. Konferenzressourcen mit einbezogen werden, insbesondere wenn Konferenzteilnehmer KT nur zeitweise teilnehmen können oder der Konferenzbereich in der verfügbaren Zeit nicht erreichbar ist. Nach dem Ermitteln des Aufenthaltsbereichs der beiden Konferenzteilnehmer KT1,KT2 im ersten Gebäude B1 kann mit Hilfe der Listen L,L' und der vom Presence- Server abgefragten Information ein Konferenzbereich bzw. ein Konferenzraum KR ermittelt werden. In dem konkreten Fall kann durch den Konferenzserver KSER festgelegt werden, dass die Konferenz K für lediglich zwei Konferenzteilnehmer KT1, KT2 im Büro des ersten Konferenzteilnehmers KT1 bzw. des Initiators I stattfindet. Alternativ kann auch ein nicht belegter Konferenzraum KR im ersten Gebäude B1 für die Konferenz K vorgesehen werden. In diesem Fall wird ein Konferenzkalender - nicht dargestellt - untersucht, ob im ersten Gebäude B1 zum Konferenztermin ein Konferenzraum KR frei ist und anschließend gebucht. Der Konferenzkalender ist für das Unternehmen U entsprechend zu pflegen, d.h. zu aktualisieren.

Nachdem der Konferenzbereich ermittelt ist, werden im Konferenzserver KSER Nachrichten N gebildet, die beispielhaft folgende Informationen umfassen:
- Art der Konferenz K
- Teilnehmer der Konferenz K
- Konferenzbereich bzw. Konferenzraum KR
- Termin T der Konferenz K einschließlich Beginnzeitpunkt
- Vorgesehene Dauer der Konferenz K
- Moderator M der Konferenz
- Initiator I der Konferenz

Derart im Konferenzserver KSER gebildete Nachrichten N werden über das lokale Netzwerk LAN an die beiden betroffenen Konferenzteilnehmer KT1, KT2 übermittelt - in der Figur durch strichlierte Linie mit Pfeil angedeutet - und der Termin T ggf. in einem Kalender der Endgeräte der Konferenzteilnehmer KT1, KT2 für eine Erinnerung vor Konferenzbeginn gespeichert.

Kurz vor einer Übermittlung der Nachricht N an die beiden Konferenzteilnehmer KT1, KT2 kann ebenfalls die Erreichbarkeit der Konferenzteilnehmer KT durch eine Presence- Funktion ermittelt werden. Hierbei kann ermittelt werden, welchen aktuellen vermittlungstechnischen Status ein Konferenzteilnehmer KT aufweist, beispielsweise besetzt oder frei oder eingestellte Rufumleitung, und über welche Netze und welche Endgeräte die Konferenzteilnehmer KT erreichbar sind. Dies ist vorteilhaft da, sofern die Nachricht N nicht über das lokale Netzwerk LAN übermittelt werden kann und ein anderes Netz, beispielsweise ein mobiles Netz INT, für die Übermittlung der Nachricht herangezogen wird.

Dem jeweiligen Konferenzteilnehmer KT kann, sofern erforderlich, eine seinen Konferenzbereich bzw. Konferenzraum KR anzeigende Navigationsinformation übermittelt werden, wobei es sich hierbei insbesondere um Adressinformationen - auch sehr detailliert wie Gebäude eines Unternehmens oder Flure in den Gebäuden handelt. Die Navigationsinformation bzw. Adressinformation wird in ein Navigationssystem eingegeben und mit Hilfe des Navigationssystems wird der jeweilige Konferenzteilnehmer KT zu seinen Konferenzbereich bzw. Konferenzraum KR geleitet. Dies kann sowohl für Navigationssysteme in Kraftfahrzeugen aber auch für Handhelds interessant sein, mit dessen Hilfe ein Konferenzraum KR in einem Gebäude oder Unternehmen aufgefunden werden soll.

In einem zweiten Beispiel sei angenommen, dass sich zusätzlich eine Gruppe von Konferenzteilnehmern KT(G) in eine Konferenz K (2) einbezogen werden soll. Die Konferenz K wird wie vorhergehend beschrieben bei dem zuständigen Konferenzserver KSER durch Übermittlung der entsprechenden Parameter p initialisiert und mit Hilfe der Listen L,L', wie bereits erläutert, festgestellt, dass die Gruppe von Konferenzteilnehmern KT(G) sich in dem zweiten Gebäude B2 des Unternehmens U aufhält. Weist die Gruppe von Konferenzteilnehmern KT(G) mehr als zwei Konferenzteilnehmer KT auf, so wird ein Konferenzbereich bzw. ein Konferenzraum KR im zweiten Gebäude B2 gesucht, sofern nicht durch Präferenzen einzelner Konferenzteilnehmer KT beispielsweise des Initiators I ein anderer Konferenzbereich bevorzugt wird. Ist ein Konferenzbereich bzw. ein Konferenzraum KR im zweiten Gebäude B2 zum vorgesehenen Termin T der Konferenz K(2) verfügbar, so wird dieser Konferenzbereich bzw. dieser Konferenzraum KR ermittelt und die beteiligten Konferenzteilnehmer KT durch eine entsprechende Nachricht N über die Konferenzart, Termin T, Konferenzraum KR, Konferenzteilnehmeranzahl, Moderator M und Initiator I informiert - nicht dargestellt. Alternativ kann bei einer Nichtverfügbarkeit eines Konferenzbereichs im zweiten Gebäude B1 der Konferenzbereich bzw. der Konferenzraum KR im ersten Gebäude B1 ermittelt und den beteiligten Konferenzteilnehmern KT durch eine entsprechende Nachricht N mitgeteilt werden.

In einem dritten Beispiel sei angenommen, dass sich die zusätzliche Gruppe von Konferenzteilnehmern KT(G), die in eine Konferenz K(3) einbezogen werden soll, in einem dritten Gebäude B3 im zweiten Standort B des Unternehmens U aufhält. Durch eine Übermittlung der Parameter p der einzuberufenden Konferenz K an den zuständigen Konferenzserver KSER am ersten Standort A des Unternehmens U wird eine Konferenz K initialisiert. Hierbei wird im Konferenzserver KSER mit Hilfe der Listen L,L' festgestellt, dass die erste Gruppe von Konferenzteilnehmern KT(G1) sich nicht am ersten sondern am zweiten Standort B befindet. Um die Aufenthaltsbereiche der Konferenzteilnehmer KT(G1) am zweiten Standort B zu ermitteln, wird vom Konferenzserver KSER des ersten Standorts A an den Konferenzserver KSER des zweiten Standorts B eine entsprechende Anfrage AF einschließlich der Parameter p der Konferenz K über das lokale Netzwerk LAN übermittelt - in der Figur durch eine gestrichelte Linie mit Pfeil angedeutet. Mit Hilfe der beiden Konferenzserver KSER werden die Konferenzbereiche bzw. die Konferenzräume KR für den Initiator I und den zweiten Konferenzteilnehmer KT2 am ersten Standort A und die Gruppe von Konferenzteilnehmern KT(G) am zweiten Standort B ermittelt. Hierbei kann wiederum die zusätzliche Information, die durch die Presence- Funktion verfügbar ist oder durch entsprechende Steuerung der Presence- Funktion abgefragt wird, in die Ermittlung der Konferenzbereiche einbezogen werden. Nach einer Abstimmung bzw. einem Informationsaustausch der beiden Konferenzserver KSER über die ermittelten Konferenzbereiche wird von beiden Konferenzservern KSER eine gleichartige Nachricht N gebildet und an die betroffenen Konferenzteilnehmer KT in jeweils ihrem Standort A,B übermittelt. Da sich die Konferenzteilnehmer KT an unterschiedlichen Standorten A,B des Unternehmens U aufhalten und für die Konferenz K(3) zwei Konferenzbereiche bzw. Konferenzräume KR an den beiden Standorten A,B vorgesehen sind, werden zusätzlich die entsprechenden Konferenzressourcen wie Konferenzserver KSER und Netzkapazitäten sowie die Konferenzräume KR einschließlich der für die Konferenz K(3) erforderlichen Konferenzendgeräte für den Zeitraum der terminierten Konferenz K reserviert bzw. belegt. Des weiteren wird mit Hilfe einer der beiden Konferenzserver KSER kurz vor dem Beginnzeitpunkt der Konferenz K automatisch eine Verbindung zwischen Konferenzendgeräten der Konferenzbereiche bzw. der Konferenzräume KR der beiden Standorte A,B eingeleitet und aufgebaut.

Mit Hilfe des erfindungsgemäßen Verfahrens können sowohl Audio- als auch audiovisuelle Konferenzen initialisiert, d.h. die Konferenzteilnehmer über die Konferenz, die Konferenzbereiche und Konferenzressourcen informiert, und zum vorgesehenen Termin aufgebaut werden. Auch können die aktuell eingerichteten Konferenzen hinsichtlich Änderungen der verbundenen Konferenzteilnehmer oder Moderatorenwechsel oder vermitteln zusätzlicher Verbindungen für die Übermittlung von weiteren Informationen gesteuert werden. Hierbei ist bei audiovisuellen Konferenzen zu beachten, dass die Endgeräte hinsichtlich Protokolle und Komprimierungsverfahren geeignet bzw. abgestimmt sind und die Netzressourcen für eine Übermittlung von audiovisuellen Informationen geeignet sind.

Mit Hilfe des erfindungsgemäßen Verfahrens können nicht nur Konferenzen gemäß der in den Ausführungsbeispielen angegebenen Unternehmensausgestaltung oder Verteilung der Konferenzteilnehmer initialisiert werden, sondern auch Konferenzen initialisiert werden, bei denen sich die Konferenzteilnehmer in anderen bzw. unterschiedlichen Unternehmensnetzen oder auch im Internet aufhalten bzw. Teilnehmer dieser Netze sind, jedoch ist eine Zuordnung der Konferenzteilnehmer zu URL- Adressen und zu Konferenzbereichen und Konferenzressourcen wie Konferenzserver und Netzressourcen vorzusehen. Ansonsten würde der Aufwand für die Bestimmung des Aufenthaltsbereichs der Konferenzteilnehmer erheblich steigen.

## Patentansprüche

1. Verfahren zum Initialisieren von terminierten Konferenzen,
- bei dem Konferenzteilnehmer (KT) ausgewählt werden,
- bei dem mit Hilfe zumindest eines Netzelementes (KSER) zumindest eines Netzes (LAN) der geographische Aufenthaltsbereich (B1..B3) der Konferenzteilnehmer (KT) ermittelt wird, und
- bei dem in Abhängigkeit von den ermittelten Aufenthaltsbereichen (B1..B3) zumindest ein geographischer Konferenzbereich (KR) für die jeweiligen Konferenzteilnehmer (KT) ermittelt und diesen zusätzlich zu einer Konferenzinformation mitgeteilt wird,
**dadurch gekennzeichnet, dass** der geographische Aufenthaltsbereich (B1 .. B3) der Konferenzteilnehmer (KT) ermittelt wird, indem in dem zumindest einen Netzelement (KSER) eine Zuordnung der Konferenzteilnehmer (KT) zu URL Adressen erfolgt, und indem mit Hilfe der URL-Adressen und einer Zuordnungsinformation (L) die Aufenthaltsbereiche (B1..B3) ermittelt werden, wobei durch die Zuordnungsinformation (L, L') die Zuordnung der URL-Adressen zu Aufenthaltsbereichen (B1..B3) angegeben ist.

2. Verfahren nach Anspruch 1, **dadurch gekennzeichnet,**
**dass** die Konferenzressourcen (KSER, LAN) für die Konferenz (K) kommunikationsnetzspezifisch ermittelt werden und zum Termin (T) den Aufbau der Konferenz (K) unterstützten.

3. Verfahren nach einem der vorhergehenden Ansprüche, **dadurch gekennzeichnet,**
**dass** mit Hilfe einer weiteren Zuordnungsinformation (L') aus den ermittelten Aufenthaltsbereichen (B1..B3) zumindest ein geographischer Konferenzbereich (KR) ermittelt wird, wobei in der weiteren Zuordnungsinformation (L') die Zuordnung der Konferenzbereiche (KR) zu den ermittelten Aufenthaltsbereichen (B1..B3) angegeben ist.

4. Verfahren nach einem der vorgehenden Ansprüche, **dadurch gekennzeichnet,**
**dass** zumindest eine zusätzliche Information in die Ermittlung der geographischen Konferenzbereiche (KR) der Konferenzteilnehmer (KT) und/oder der Konferenzressourcen (KSER, LAN) einbezogen wird.

5. Verfahren nach Anspruch 4, **dadurch gekennzeichnet,**
**dass** durch die zusätzliche Information,
- ein bevorzugter Konferenzbereich (KR) eines Konferenzteilnehmers (KT) und/oder einer Gruppe von Konferenzteilnehmern (KT(G)), und/oder
- ein bevorzugtes Kommunikationsnetz (LAN) eines Konferenzteilnehmers (KT) und/oder einer Gruppe von Konferenzteilnehmern (KT(G)),
- bevorzugte Kommunikationsnetzressourcen (KSER) eines Konferenztellnehmers (KT) und/oder einer Gruppe von Konferenzteilnehmern (KT(G)), und/oder
- zumindest eine den Konferenzteilnehmern (KT) bereitzustellende, zusätzliche Applikation
angezeigt wird.

6. Verfahren nach Anspruch 4 oder 5, **dadurch gekennzeichnet, dass** die zusätzliche Information sowie das Endgerät, dem die Konferenzinformation einschließlich des Konferenzbereichs (KR) mitgeteilt wird, durch eine Presence- Punktion des Netzes (LAN) ermittelt und für die Ermittlung des Konferenzbereichs (KR) und der Konferenzressourcen (KSER) sowie für deren Übermittlung bereitgestellt wird.

7. Verfahren nach einem der vorhergehenden Ansprüche, **dadurch gekennzeichnet,**
**dass** die Konferenzteilnehmer (KT) einzeln in Abhängigkeit von der Konferenzart ausgewählt werden und/oder durch eine vorgegebene konferenzartspezifische Gruppe ausgewählt sind.

8. Verfahren nach einem der vorhergehenden Ansprüche, **dadurch gekennzeichnet,**
**dass** für den jeweiligen Konferenzteilnehmer (KT) eine seinen Konferenzbereich (KR) anzeigenden Navigationsinformation ermittelt und übermittelt wird, mit deren Hilfe ein Navigationssystem den jeweiligen Konferenzteilnehmer (KT) zu seinen Konferenzbereich (KR) leitet.

9. Verfahren nach einem der vorhergehenden Ansprüche,
**dadurch gekennzeichnet,**
**dass** die Konferenzressourcen
- Server (KSER) und/oder
- Endgeräte und/oder
- unterschiedliche Konferenzmodule
die Initialisierung, den Aufbau einer Konferenz sowie die Konferenzsteuerung zumindest unterstützen.

10. Verfahren nach einem der vorhergehenden Ansprüche,
**dadurch gekennzeichnet,**
**dass** durch die Konferenzressourcen die Konferenzteilnehmer (KT) als zusätzlich bereitgestellte Applikationen während der Konferenz (K) unterstützt werden.

11. Verfahren nach einem der vorhergehenden Ansprüche,
**dadurch gekennzeichnet,**
**dass** eine Konferenz (K) durch folgende Parameter p definierbar ist,
- Art der Konferenz (K),
- Konferenzidentifizierung
- Startzeit,
- Konferenzdauer (optional)
- Beendigungszeit (optional)
- Namen der Konferenzteilnehmer KT (optional)
- URL- Liste der Konferenzteilnehmer KT
- URL- Liste der Konferenzressourcen (z.B. Server (optional).

12. verfahren nach einem der vorhergehenden Ansprüche,
**dadurch gekennzeichnet,**
**dass** nachdem zumindest ein Konferenzbereich (KR) ermittelt ist, eine Nachricht N gebildet und an die Konferenzteilnehmer (KT) übermittelt wird, wobei die Nachricht N folgende Informationen umfassen kann
- Art der Konferenz K
- Teilnehmer der Konferenz K
- Konferenzbereich bzw. Konferenzraum KR
- Termin T der Konferenz K einschließlich Beginnzeitpunkt:
- Vorgesehene Dauer der Konferenz K
- Moderator der Konferenz
- Initiator 1 der Konferenz

13. Anordnung mit Erzeugnissen zum Initialisieren von terminierten Konferenzen,
mit einem Erzeugnis mit Mitteln zum Durchführen zumindest eines Teils der Verfahrensschritte nach einem der Ansprüche 1 bis 12,
verbunden mit zumindest einem weiteren Erzeugnis mit Mitteln zur Durchführung der verbleibenden Verfahrenschritte nach einem der Ansprüche 1 bis 13.

14. Konferenzserver für eine Zusammenarbeit mit weiteren Elementen zumindest eines Netzes, zum Initialisieren von terminierten Konferenzen mit Mitteln im Konferenzserver zum Durchführen zumindest eines Teils der Verfahrensschritte nach einem der Ansprüche 1 bis 12,
wobei in den weiteren Elementen Mittel zur Durchführung der verbleibenden Verfahrehschritte nach einem der Ansprüche 1 bis 12 vorgesehen sind.

## Claims

1. A method for the initialisation of scheduled conferences,
- in which conference participants (KT) are selected,
- in which with the aid of at least one network element (KSER) of at least one network (LAN), the geographical location (B1..B3) of the conference participants (KT) is determined, and
- in which, as a function of the determined locations (B1..B3), at least one geographical conference area (KR) for the respective conference participants (KT) is determined and is communicated to them together with conference information,
wherein the geographical location (B1...B3) of the conference participants (KT) is determined by the conference participants (KT) being assigned to URL addresses in the at least one network element (KSER) and by the locations (B1..B3) being determined with the aid of the URL addresses and an assignment information (L), with the assignment information (L, L') indicating the assignment of the URL addresses to locations (B1..B3).

2. The method of claim 1 wherein the conference resources (KSER, LAN) for the conference (K) are determined for specific communication networks and assist the setup of the conference (K) at time (T).

3. The method of any one of the preceding claims wherein at least one geographical conference area (KR) is determined from the determined locations (B1..B3) with the aid of a further assignment information (L'), with the further assignment information (L') indicating the assignment of the conference areas (KR) to the determined locations (B1..B3).

4. The method of any one of the preceding claims wherein at least one additional information is included in the determination of the geographical conference areas (XR) of the conference participants (KT) and/or of the conference resources (KSER, LAN).

5. The method of claim 4 wherein
- a preferred conference area (KR) of a conference participant (KT) and/or of a group of conference participants (KT(G)), and/or
- a preferred communication network (LAN) of a conference participant (KT) and/or of a group of conference participants (KT(G)),
- preferred communication network resources (KSER) of a conference participant (KT) and/or of a group of conference participants (KT(G)), and/or
- at least one additional application to be provided for the conference participants (KT) is displayed by the additional information.

6. The method of claim 4 or 5 wherein the additional information and the terminal to which the conference information including the conference area (KR) is communicated is determined by a presence function of the network (LAN) and is provided for the determination of the conference area (KR) and the conference resources (KSER) as well as for their communication.

7. The method of any one of the preceding claims wherein the conference participants (KT) are selected individually depending on the type of conference and/or are selected by a given group that is specific to the type of conference.

8. The method of any one of the preceding claims wherein, for the respective conference participant (KT), a navigation information which displays his conference area (KR) is determined and communicated, and with whose help a navigation system guides the respective conference participant (KT) to his conference area (KR).

9. The method of any one of the preceding claims wherein the conference resources
- servers (KSER) and/or
- terminals and/or
- different conference modules
at least support the initialisation, the setup of a conference as well as the conference management.

10. The method of any one of the preceding claims wherein the conference participants (KT) are supported by the conference resources as additionally provided applications during the conference (K).

11. The method of any one of the preceding claims wherein a conference (K) can be defined by the following parameters p,
- type of conference (K),
- conference identification,
- start time,
- conference length (optional),
- end time (optional),
- names of the conference participants KT (optional).
- URL list of conference participants KT
- URL list of conference resources (e.g. servers (optional).

12. The method of any one of the preceding claims wherein, after at least one conference area (KR) is determined, a message N is formed and communicated to the conference participants (KT); message N can comprise the following information
- the type of conference K
- the participants of the conference K
- the conference area or conference room KR
- the date T of the conference K including the start time
- the anticipated length of the conference K
- the host of the conference
- the initiator I of the conference

13. An arrangement with products for the initialisation of scheduled conferences, having a product with means for executing at least a part of the process steps according to any one of claims 1 to 12, connected to at least one further product having means to execute the remaining process steps according to any one of claims 1 to 13.

14. A conference server for working together with other elements of at least one network for the initialisation of scheduled conferences, having means in the conference server for executing at least a part of the process steps according to any one of claims 1 to 12, with means for executing the remaining process steps according to any one of claims 1 to 12 being provided in the other elements.

## Revendications

1. Procédé d'initialisation de conférences planifiées,
- dans lequel des participants de conférence (KT) sont sélectionnés,
- dans lequel, à l'aide d'au moins un élément de réseau (KSER) d'au moins un réseau (LAN), le site de séjour (B1..B3) géographique des participants de conférence (KT) est déterminé, et
- dans lequel, en fonction des sites de séjour (B1..B3) déterminés, au moins un site de conférence (KR) géographique est déterminé pour les participants de conférence (KT) respectifs et communiqué à ceux-ci en plus d'une information sur la conférence,
**caractérisé en ce que** le site de séjour (B1..B3) géographique des participants de conférence (KT) est déterminé **en ce que** dans ledit au moins un élément de réseau (KSER) est effectué une affectation des participants de conférence (KT) à des adresses URL et **en ce que**, à l'aide des adresses URL et d'une information d'affectation (L), les sites de séjour (B1..B3) sont déterminés, l'affectation des adresses URL à des sites de séjour (B1..B3) étant indiquée par l'information d'affectation (L, L').

2. Procédé selon la revendication 1, **caractérisé en ce que** les ressources de conférence (KSER, LAN) pour la conférence (K) sont déterminées d'une manière spécifique au réseau de communication et assistent l'établissement de la conférence (K) à la date prévue (T).

3. Procédé selon l'une quelconque des revendications précédentes, **caractérisé en ce**
**que**, à l'aide d'une autre information d'affectation (L'), au moins un site de conférence (KR) géographique est déterminé à partir des sites de séjour (B1..B3) déterminés, l'affectation des sites de conférence (KR) aux sites de séjour (B1..B3) déterminés étant indiquée dans l'autre information d'affectation (L').

4. Procédé selon l'une quelconque des revendications précédentes, **caractérisé en ce**
**qu'**au moins une information supplémentaire est incorporée dans la détermination des sites de conférence (KR) géographiques des participants de conférence (KT) et/ou des ressources de conférence (KSER,LAN).

5. Procédé selon la revendication 4, **caractérisé en ce que**, par l'information supplémentaire, est affiché :
- un site de conférence (KR) préféré d'un participant de conférence (KT) et/ou d'un groupe de participants de conférence (KT(G)), et/ou
- un réseau de communication préféré (LAN) d'un participant de conférence (KT) et/ou d'un groupe de participants de conférence (KT(G)),
- des ressources préférées de réseau de communication (KSER) d'un participant de conférence (KT) et/ou d'un groupe de participants de conférence (KT(G)), et/ou
- au moins une application supplémentaire à mettre à disposition des participants de conférence (KT).

6. Procédé selon la revendication 4 ou 5, **caractérisé en ce**
**que** l'information supplémentaire ainsi que l'appareil terminal, auquel l'information sur la conférence y compris le site de conférence (KR) est communiquée, sont déterminés par une fonction de présence du réseau (LAN) et sont mis à disposition pour la détermination du site de conférence (KR) et des ressources de conférence (KSER) ainsi que pour leur transmission.

7. Procédé selon l'une quelconque des revendications précédentes, **caractérisé en ce**
**que** les participants de conférence (KT) sont sélectionnés individuellement en fonction du type de conférence et/ou sont sélectionnés par le biais d'un groupe prédéfini spécifique au type de conférence.

8. Procédé selon l'une quelconque des revendications précédentes, **caractérisé en ce**
**que**, pour le participant de conférence (KT) respectif, une information de navigation indiquant son site de conférence (KR) est déterminée et transmise, à l'aide de laquelle un système de navigation guide le participant de conférence (KT) respectif à son site de conférence (KR).

9. Procédé selon l'une quelconque des revendications précédentes, **caractérisé en ce**
**que** les ressources de conférence
- serveur (KSER) et/ou
- appareils terminaux et/ou
- différents modules de conférence
assistent au moins l'initialisation, l'établissement d'une conférence ainsi que la commande de la conférence.

10. Procédé selon l'une quelconque des revendications précédentes, **caractérisé en ce**
**que** les participants de conférence (KT) sont assistés durant la conférence (K) par les ressources de conférence en tant qu'applications mises en plus à disposition.

11. Procédé selon l'une quelconque des revendications précédentes, **caractérisé en ce**
**qu'**une conférence (K) peut être définie par les paramètres p suivants :
- type de la conférence (K),
- indentification de la conférence,
- heure de début,
- durée de la conférence (optionnel)
- heure de fin (optionnel)
- nom des participants de conférence KT (optionnel)
- liste des adresses URL des participants de conférence KT
- liste des adresses URL des ressources de conférence, par exemple serveur (optionnel).

12. Procédé selon l'une quelconque des revendications précédentes, **caractérisé en ce**
**que**, après qu'au moins un site de conférence (KR) est déterminé, un message N est formé et transmis aux participants de conférence (KT), le message N pouvant comprendre les informations suivantes :
- type de la conférence K
- participant de conférence K
- site de conférence ou salle de conférence KR
- date prévue T de la conférence K y compris l'heure de début
- durée prévue de la conférence K
- animateur de la conférence
- initiateur I de la conférence

13. Dispositif avec des produits pour l'initialisation de conférences planifiées,
avec un produit avec des moyens pour l'exécution d'au moins une partie des étapes de procédé selon l'une quelconque des revendications 1 à 12,
relié à au moins un autre produit pour l'exécution des étapes de procédé restantes selon une quelconque des revendications 1 à 13.

14. Serveur de conférence pour une coopération avec d'autres éléments d'au moins un réseau, pour l'initialisation de conférences planifiées avec des moyens dans le serveur de conférence pour l'exécution d'au moins une partie des étapes de procédé selon l'une quelconque des revendications 1 à 12,
des moyens pour l'exécution des étapes de procédé restantes selon l'une quelconque des revendications 1 à 12 étant prévus dans les autres éléments.
